# EUROPEAN PATENT SPECIFICATION

(11) **EP 3 893 445 B1**
(45) Date of publication and mention of the grant of the patent: **03.04.2024**
(21) Application number: 21166888.4
(22) Date of filing: 06.04.2021
(51) Int. Cl.: H04L 12/28

(54) **COMMUNICATION MODULE AND DEVICE FOR WIRELESS NETWORKS**
KOMMUNIKATIONSMODUL UND VORRICHTUNG FÜR DRAHTLOSE NETZWERKE
MODULE ET DISPOSITIF DE COMMUNICATION POUR DES RÉSEAUX SANS FIL

(30) Priority: 06.04.2020 IT 202000007282
(43) Date of publication of application: 13.10.2021
(73) Proprietor: Cherubini S.p.A., 25081 Bedizzole (BS) (IT)
(72) Inventor: SCARONI, Elpidio, I-25081 Bedizzole, BRESCIA (IT); CHERUBINI, Lionello, I-25081 Bedizzole, BRESCIA (IT)
(74) Representative: Chimini, Francesco

(56) References cited:
- EP-A2- 1 898 563
- US-A1- 2019 119 978
- US-A1- 2019 309 559

## Description

The present invention relates to the field of automation and home automation networks, and in particular, relates to a device of such networks and an installation method thereof.

The most recent and widespread automation and home automation systems, in particular those based on standard multi-point wireless networks (WiFi, Bluetooth, Zigbee, EnOcean, Z-Wave, etc.), on the one hand, make it very easy to interact with real objects (sensors and actuators) at "user" level but on the other hand, greatly complicate the initial configuration. For example, some parameters, such as the limit switch positions, must be interactively configured in the case of electronic motors adapted to move roller shutters and the like. In this step, the installer uses a "dead man" control mode and constantly observes the movements of the shutter. This is essential to correctly set the up/down movement direction and the limit switch positions and to avoid damage to property and injury to people.

For this reason, the current automation and home automation systems mentioned above are practically limited to the use in combination with electromechanical limit switch motors, where the installer must resort to a lengthy set-up process, using adjustment screws, or with electronically controlled motors, that the installer must configure using a dedicated control panel. In both cases, the electronics containing the communication module with the wireless networks are external to the motor and are connected only after the entire configuration process has been successfully completed. This implies several drawbacks:
- Impossibility to access advanced motor functions (limit switch electronic adjustment, obstacle detection), and/or need to use dedicated tools (screwdrivers, control panels) for configuration.
- Need to find a suitable space to house a control module, outside the motor, protected from humidity.
- Need to access and/or modify the motor connections, at the time of initial configuration, and whenever interventions are needed even for a minor adjustment.
- Lack of real motor position and status feedback. The external electronics can only estimate the position of the motor, and will not notice any malfunction (presence of obstacles or motor breakage).

In an attempt to solve some of the drawbacks, some manufacturers have created motors which integrate wireless communication electronics towards the aforesaid standard networks. Such solutions, while solving at least part of the above mentioned drawbacks, do not have the flexibility needed to support all the initial configuration operations. Indeed, the network protocols do not provide for "dead man" command modes at all, or if they do, they introduce an excessively high latency, which can cause damage to the structure, or compromise the installer's safety. For this reason, the wireless motors which integrate communication modules towards standard networks are practically limited to the so-called "Plug & Play" motors, i.e. which do not require configuration (e.g. of limit switches) but for this very reason, need expensive mechanical locking accessories, and offer only a limited set of functions (e.g. they do not have a customizable intermediate position, do not allow the operation of adjustable shutters, etc.).

The experience and practice of operators in the sector demonstrate that the only practical, effective and cost-effective manner to carry out the configuration operations is to use a simple portable remote control which communicates directly with a receiver located inside the motor, in point-to-point mode instead of network mode.

For this reason, other manufacturers of motors or accessories have created solutions based on gateways, which are interposed between standard wireless networks and the direct point-to-point communication system. While solving most of the aforesaid drawbacks, these solutions introduce new ones :
- additional costs and installation time to add and configure the gateway;
- limited wireless range and thus the need to add signal repeaters for point-to-point communications.
US 2019/119978 A1 discloses a system for controlling motorized window coverings having a processor, a network device and wireless transmitters enabling connection via a network. The network is controlled by one or more mobile devices which receive user input. The mobile devices wirelessly connect to a local area network (LAN) via a hub. One or more hubs are connected via the LAN. The window coverings are networked via a personal area network (PAN). The hubs convert the LAN protocol to the PAN protocol. EP 1 898 563 A2 discloses a method comprising detecting arrival and departure of a mobile terminal of a user in a domestic radio zone of a control device. US 2019/309559 A1 discloses an automated window mechanism with sensor informed calibration.

It is the object of the present invention to suggest a communication module capable of combining multi-point communication to standard wireless networks with the advantages of point-to-point communications to solve the drawbacks of existing solutions complained of above.

Such an object is achieved by an electromechanical device according to claim 1, by a network according to claim 6 and by an installation method according to claim 7. The dependent claims describe preferred or advantageous embodiments of the invention.

According to claim 1, an electromechanical device is suggested, comprising at least one electromechanical actuator, e.g. a gear motor group for controlling the movement of a blind, an application controller configured to control said electromechanical actuator, and a communication module operatively connected to the application controller for controlling the electromechanical actuator through a wireless automation or home automation network. A communication module comprises a first multi-point wireless communication interface, a second point-to-point wireless communication interface, and a communications manager.

The first interface is configured to receive encoded digital data from the wireless network, transmit it to the wireless network, and process it in accordance with a network protocol defined by the wireless network.

The second interface is configured to receive and process digital data transmitted by a remote control.

The communications manager is operatively connected to the first interface and to the second interface and is provided with a third interface that is configured to:
- receive data from the first interface and from the second interface, translate them into a format that is readable by an application controller that controls actuators and/or sensors of the device, and transmit said translated data to said application controller,
- receive data from the application controller, encode said data in a format defined by the network protocol, and transmit said encoded data to the first interface.

According to an embodiment, the communications manager is configured to transmit the translated data to the application controller, queuing them up in sequence.

In an embodiment, the first interface comprises first hardware means, adapted to manage the modulation and demodulation of the wireless signal, and second hardware and software means adapted to process the received and sent digital data according to the network protocol.

In an embodiment, the communication module comprises one or more antennas operatively connected to the first and to the second interface to receive/transmit data.

It is a further object of the invention an automation or home automation network, comprising at least one device as described above, a gateway adapted to receive and transmit data from and to the first wireless communication interface by means of a wireless digital communication protocol, and a remote control adapted to transmit digital data to the second wireless communication interface.

The invention further relates to an installing method of the aforesaid electromechanical device. The method initially provides associating the remote control with the application controller of the device, for example by using a combination of buttons on the remote control and observing the feedback movements of the actuator. It is thus possible to use the remote control to carry out the desired adjustment of the actuator, e.g. the limit switch positions. Successively, using the remote control, the process of associating the application controller with the multi-point digital communication network is activated.

In particular, the application controller sends a general association request to a multi-point digital communication network by means of the third communication interface. The communications manager translates the general request into a specific request that complies with the communication protocol of the multi-point digital communication network. The first communication interface sends the specific request to a gateway of the multi-point digital communication network. After the response from the gateway, the first communication interface receives such a response that the association has been made, which response is transmitted by the gateway of the multi-point digital communication network. The communications manager translates the response from the gateway into a general confirmation message, which is readable by the application controller, and sends such a message to the application controller. At this point, the application controller can actuate the actuator, e.g. to carry out the agreed feedback movement to show the installer that the command was successful.

In an embodiment at the end of the process of associating the device to the network, the gateway assigns a new address to the device, updates the network map, and sends a confirmation of association. The communications manager receives such a confirmation, translates it into a final message that the association has ended and was successful, and sends it to the application controller.

The features and advantages of the electromechanical device, the network, and the installation method according to the invention will be apparent from the following description which illustrates preferred embodiments, given by way of indicative, nonlimiting examples, with reference to the accompanying figures, in which:
Figure 1 is a block chart of a device which includes the communication module according to the invention;
Figure 2 is a flow chart of the data processing performed by the multi-point communication interface;
Figure 3 is a flow chart of the data processing performed by the point-to-point communication interface;
Figure 4 is a flow chart of the data processing performed by the communications manager;
Figure 5 diagrammatically shows an actuator for moving a blind or shutter;
Figure 5a is a block chart of the actuator in figures 5; and
Figure 6 shows the actuator of figure 5 in a home automation network.

In said drawings, reference numeral 1 indicates a communication module according to the invention for controlling an electromechanical device 2 through a wireless automation or home automation network. A communication module 1 comprises a first multi-point wireless communication interface 12, a second point-to-point wireless communication interface 14, and a communications manager 16.

The first interface 12 is configured to receive encoded digital data from the wireless network, transmit them to the wireless network, and process them in accordance with a network protocol defined by the wireless network.

The second interface 14 is configured to receive and process digital data transmitted by a remote control.

The communications manager 16 is operatively connected to the first interface 12 and to the second interface 14 and is provided with a third interface 18 that is configured to:
- receive data from the first interface 12 and from the second interface 14, translate them into a format that is readable by an application controller 20 which controls actuators 22 and/or sensors 24 of the device 2, and transmit said translated data to the application controller 20,
- receive data from the application controller 20, encode such data in a format defined by the network protocol, and transmit the encoded data to the first interface 12.

In the scope of the present invention, a remote control means an object which performs only the function of transmitting, at a single, fixed frequency, commands coded according to a proprietary protocol. The remote control is thus not equipped with hardware and/or software components configured to perform the reception function. Its internal architecture and the components used are thus very essential, and its cost is also very low. The main components of the remote control are a processing unit with a limited calculation capacity (e.g. an 8bit microcontroller), a wireless transmission circuit, control buttons, possible indicator lights, batteries. The advantage of using this type of remote control is given by the wireless protocol, which, being very simple and direct point-to-point (i.e. it does not have to pass through a multi-point network), ensures very low latency, i.e. maximum speed in starting and stopping the electromechanical actuator to be controlled, in particular during the step of configuration or installation. Furthermore, the remote control of the type described above offers intrinsic safety where the electromechanical actuator must be controlled in "dead man" mode, e.g., in case of danger to the safety of the installer, simply release the control button to stop the motor.

In an embodiment, the remote control is of the type having a button panel limited to the essential up/down/stop controls, and a simple indicator light (an LED) to signal its activation.

It is worth noting that the use of a smart mobile communication device, e.g., a smartphone, a tablet, a smartwatch, instead of the aforesaid remote control, even if provided with an application dedicated to controlling an electromechanical actuator, is unsuitable to install and configure the motor actuator, in particular, because it has a much longer latency time, less accuracy and less safety for the installer.

Indeed, a smart mobile communication device is designed to perform multiple functions, such as transmitting and receiving data, at various frequencies and according to various protocols, which ensure delivery of the message to its destination, and the respective feedback. The network protocols, which cannot guarantee a low latency due to their complexity and thus lack the necessary speed to manage motor control and installer safety, are what mainly make these devices unsuitable for configuring or installing an electromechanical actuator.

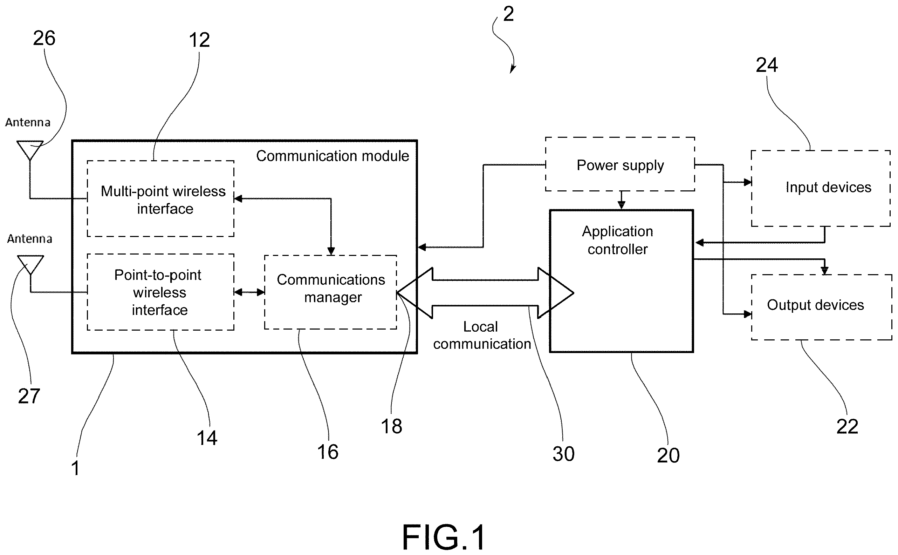

As shown in the diagram in figure 1, the communication module 1 may be provided with one or more antennas 26, 27 for wireless data transmission and reception by the first interface 12 and data reception by the second interface 14. As mentioned, the communications manager 16 is provided with its own interface 18, preferably wired, for local communication with the application controller 20. By way of example, a controller of a generic application is illustrated in the diagram, which receives signals and information from input devices 24 and drives output devices 22. The use of the communication module in a specific application, i.e. a tubular motor for rolling shutters, will be described in detail later.

The constituent parts of the communication module 1 will now be described.

The multi-point wireless communication interface 12 is essentially a radio which receives and transmits digitally encoded information according to the protocol defined by the network standard with which one wishes to communicate. Given the considerable level of complexity of network protocols, this wireless communication interface normally consists of hardware which manages the modulation and demodulation of the wireless signal, and hardware and firmware which process the digital data received and sent, according to the network protocol.

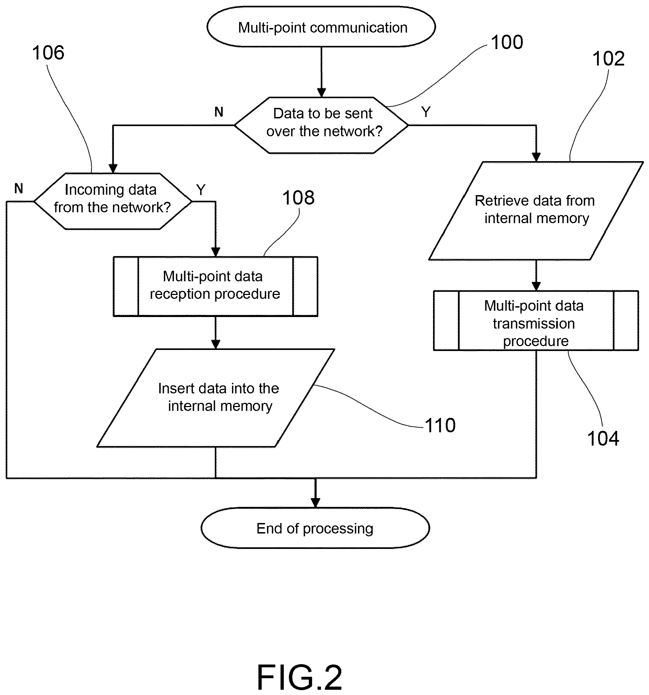

In an embodiment, the two hardware parts are integrated into the same physical chip. Figure 2 shows the general data processing flow. The data reception and transmission procedures are defined by the network protocol used.

Initially, the interface 12 checks whether there are data to be sent on the network (step 100).

If so, the interface 12 retrieves the data from its internal memory (step 102) and activates the multi-point data transmission procedure (step 104) according to the network protocol used.

If there are no data to be sent over the network, the interface 12 checks whether there are incoming data from the network (step 106).

If so, the interface 12 activates the multi-point data reception procedure (step 108), according to the network protocol used, and inserts the data into its internal memory (step 110).

The point-to-point wireless communication interface 14 is also essentially a radio but is normally limited to receiving digitally encoded information, without transmitting, and may consist only of dedicated hardware.

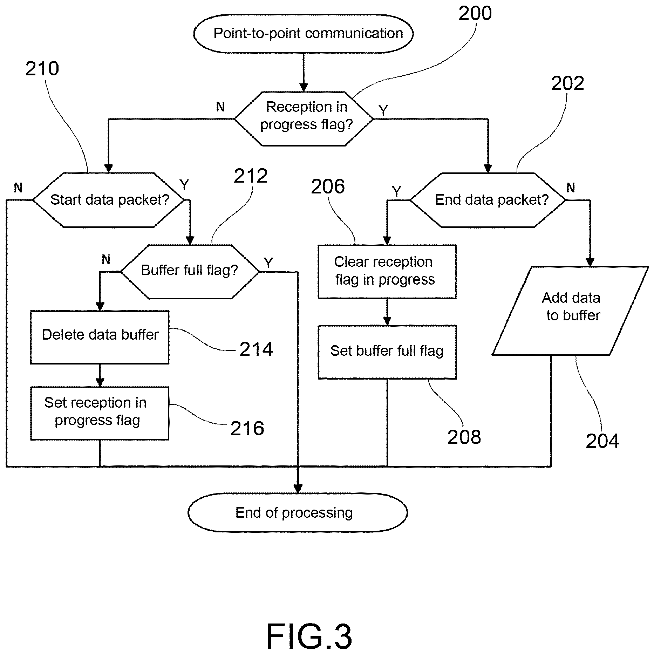

Figure 3 shows the general data processing flow performed by the second interface 14.

The second interface 14 checks whether it is in a data receiving situation (step 200). If so, the second interface 14 waits for the end of reception of a data packet (step 202). If the data are still arriving, they are queued in a memory buffer of the second interface 14 (step 204).

When the data packet has been received, a flag which indicates reception in progress is reset (step 206) and a memory buffer full flag is set (step 208).

If, on the other hand, there is no data reception in progress, the second interface 14 waits for the start of the reception of a data packet (step 210).

If data reception begins, the second interface 14 checks the full memory buffer flag status (step 212). If the flag is active, the processing ends.

However, if the flag is not active, the memory buffer is cleared (step 214) and the data reception in progress flag is activated (step 216).

The communications manager 16 translates the data and messages to/from the wireless communication interfaces 12, 14, and routes them to the local communication channel 30.

In an embodiment, the communications manager 16 may incorporate wireless communication protocols and directly manage the hardware of the first and second interfaces 12, 14.

The message translation allows to relieve the application controller 20 of the burden of interpreting data and messages with different protocols. This also provides the devices with the characteristic of modularity and easily allows, on the final application, the interchangeability between modules which are compatible with various multi-point network protocols on a case-by-case basis.

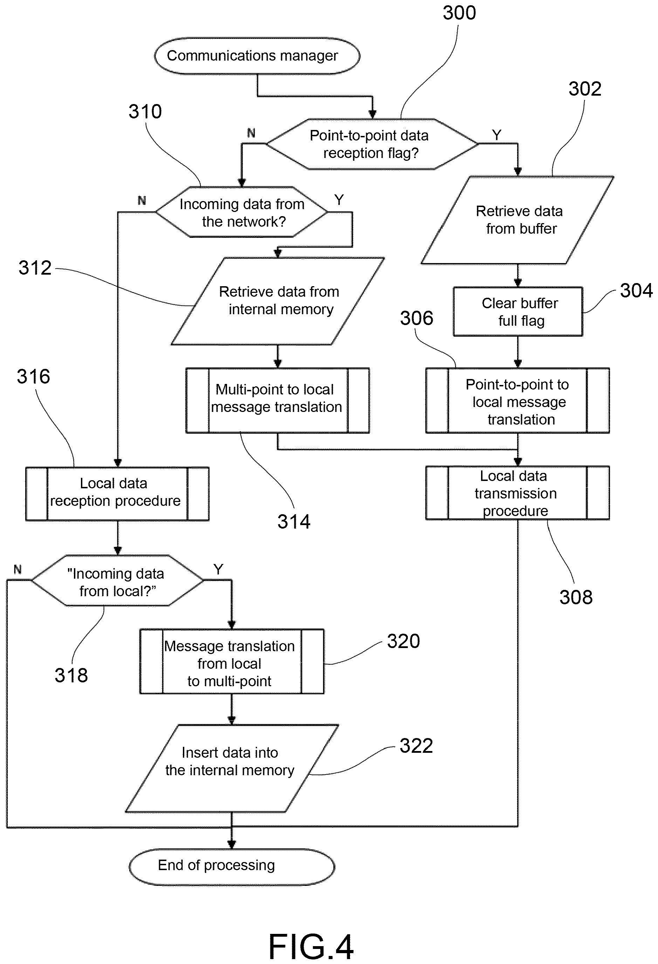

Figure 4 illustrates the general flow of communications management by the communications manager 16. In an embodiment, the various types of data and messages are queued sequentially on the local communication channel 30, avoiding the possibility of superimposition.

In the initial step 300, the communications manager 16 checks whether a point-to-point data reception is in progress, i.e., whether the respective flag which indicates the reception is in progress is active.

If so, the communications manager 16 retrieves data from the memory buffer of the second point-to-point interface 14 (step 302) and resets the buffer full flag (step 304).

At this point, the communications manager 16 translates the message from the point-to-point communication protocol format to the local format, readable by the application controller 20 (step 306), and thus initiates the local data transmission procedure, i.e., to the application controller 20 (step 308).

If, instead, the point-to-point data reception flag is inactive, the communications manager 16 checks whether there are incoming data from the multi-point network (step 310).

If so, the communications manager 16 retrieves data from the internal memory of the first interface 12 (step 312) and translates such data from the format of the multi-point network protocol used to the local format, readable by the application controller 20 (step 314). At this point, the translated data may be routed over the local channel 30 to be transmitted to the application controller 20 (step 308).

If there are no incoming data from the multi-point network, the communications manager 16 is ready to handle a local data reception procedure, i.e., coming from the application controller 20 through the local channel 30 (step 316). The communications manager 16 then checks whether there are incoming data on the local channel (step 318).

If so, the data are translated from the local format to the multi-point network protocol format (step 320) .

The translated data are then inserted into the internal memory of the first multi-point communication interface 12 (step 322).

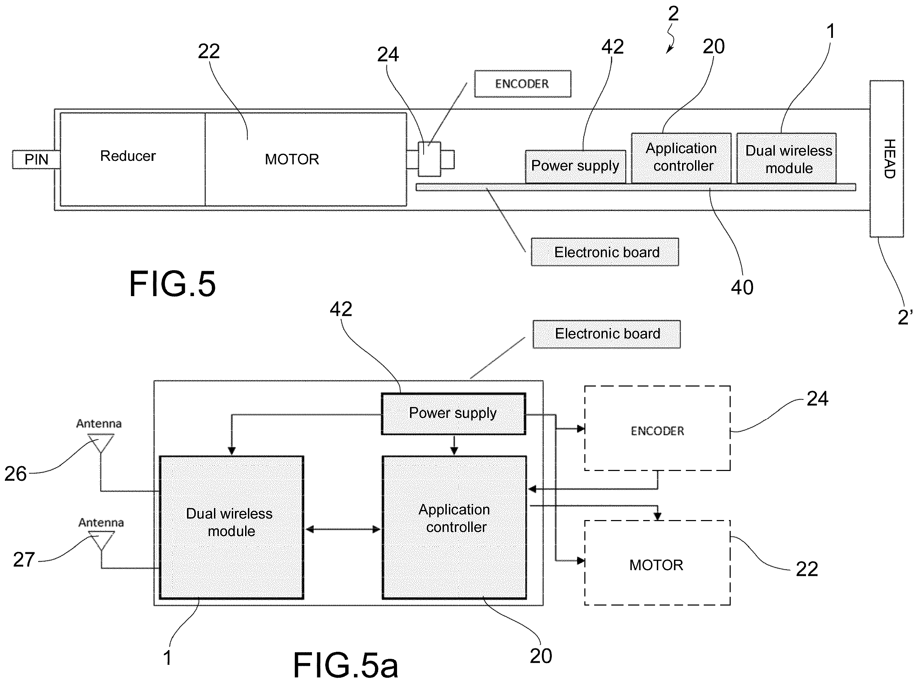

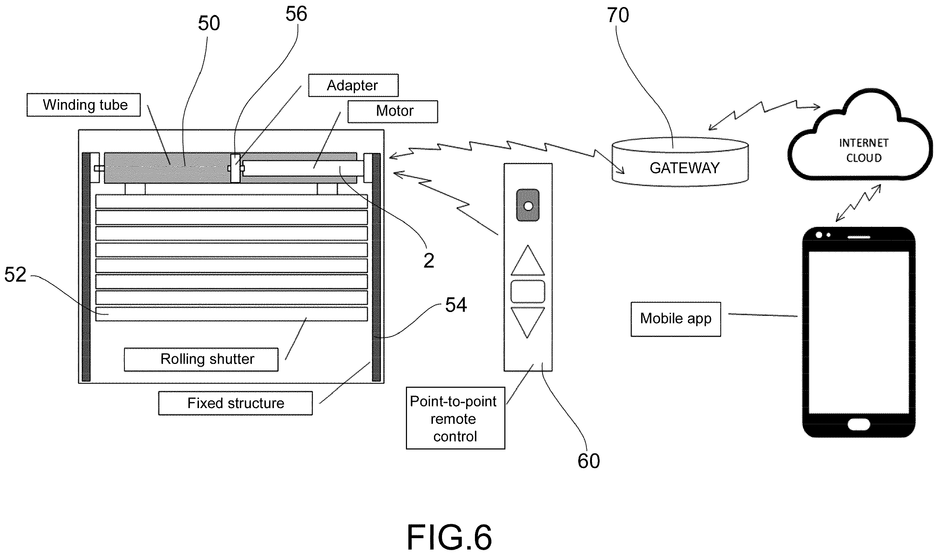

An example of a practical application of the communication module 1 to an electronically controlled tubular shutter motor 2 is now described with reference to figures 5, 5a, and 6. The main internal components are an electronic board 40, the encoder 24, and the motor-reducer group 22. Power supply devices 42, the application controller 20, and the communication module 1 are located on circuit board 40. The application controller 20 communicates on the local channel with the communication module 1, receives in input the signals of the encoder 24 (from which it obtains position and speed of the motor), and drives the motor-reducer group 22.

The tubular motor 2 is installed within the winding tube 50 which winds the roller shutter 52 or the blind. The head 2' of the tubular motor 2 is fixed to the stable structure 54 of the frame, while the pin of the motor-reducer group 22, through an appropriate adapter 56, rotates the winding tube 50. When installing, the installer can employ a point-to-point wireless remote control 60 for programming and configuring the motor. In this example, the installation provides associating the motor with a Z-Wave home automation network. A Z-Wave 70 gateway and an Internet connection are all that are needed to operate the network.

In this example, the installation sequence is as follows.

The point-to-point remote control 60 is associated with the motor 22, using a combination of buttons and observing the feedback movements of the motor.

The motor can now be moved using the up-down buttons, in "dead man" mode. The motor stops immediately when the buttons are released, allowing very precise adjustment of the end-of-stroke positions.

Once the adjustment is complete, a combination of buttons on the point-to-point remote control will prompt the motor to begin the associating process with the ZWave network. This considerably facilitates the installation process because the motor is often not easily accessible once it is mounted inside the winder tube. Indeed, in the common devices such an operation normally requires pressing a button on the control electronics.

The motor application controller sends a request to begin the multi-point network association process through local communication. The application controller does not know which network it will connect to and so it sends a general association request. The communications manager translates this general message into a request to associate with the ZWave wireless network, and when it obtains permission, it translates the message and sends the application controller a generic acknowledgment, without reference to the network type. All these operations take place automatically in a few milliseconds.

It is worth noting that an abstraction level is created between the application controller and the communication module, which makes the management of various types of the network very reliable and flexible.

When confirmation that the associating process has begun arrives, the application controller commands the motor to perform the agreed feedback movements to let the installer know that the command has been successful.

The gateway assigns the device a new address, updates the network map, and sends an association confirmation. The communications manager receives such a confirmation and translates it into a final message that the association has ended and was successful, sending it to the application controller. The application controller commands the motor to perform one last feedback movement, and the installer understands that the process is finished.

An "interview" phase then starts, during which the gateway 70 queries the device 2 to understand its functions to classify it most correctly. All this is done automatically and transparently for the installer. At the end, the installer can check the appearance of the new device 2, e.g. on the interface of a mobile application, and can interact with it.

After the device has been associated with the network, the point-to-point remote control may no longer be required, but it can still be used for a variety of purposes, e.g. as a local physical control point, or for any configuration adjustments.

It is worth noting that to connect devices of known technology to a local physical control point, it is necessary to provide an additional control panel compatible with the network (e.g. ZWave), associate it, and configure it appropriately: this involves additional costs and time. Furthermore, whenever a configuration adjustment is required, the control electronics must be disconnected and/or the device must be accessed to connect the control panel.

The communication module can be designed to be produced in numerous versions, in which a different wireless multi-point will be mounted, according to the type of multi-point network for which the final product will be intended. The wireless point-to-point part can instead be the same on all versions, to give the installer the same programming mode, independently of the type of multi-point network.

The communication module can be physically made as a small electronic circuit, with mechanical dimensions and standardized electrical interface, so that it can be easily installed on many different "motherboards", of as many finished products, potentially also very different from each other.

A person skilled in the art may make changes and adaptations to the embodiments of the communication module, the device, and the installation method according to the invention or can replace elements with others which are functionally equivalent to satisfy contingent needs without departing from the scope of protection of the appended claims. All the features described above as belonging to one possible embodiment may be implemented independently from the other described embodiments.

## Claims

1. An electromechanical device (2) for controlling a roller blind or shutter (52), comprising:
i) at least one electromechanical actuator (22), wherein the electromechanical actuator (22) is a gear motor group suitable to control the rotation of a winding tube (50) of the roller blind or shutter,
ii) an encoder (24) operatively connected to the gear motor group,
iii) an application controller (20) configured to control said electromechanical actuator (22), the application controller (20) being configured to drive the gear motor group and to receive signals from the encoder (24), and
iv) a communication module (1) operatively connected to the application controller for controlling the electromechanical actuator through a wireless home automation network,
wherein the communication module (1) comprises a first multi-point wireless communication interface (12), a second point-to-point wireless communication interface (14), and a communications manager (16), wherein:
- the first interface (12) is configured to receive encoded digital data from the wireless network, transmit it to the wireless network and process it in accordance with a network protocol defined by the wireless network;
- the second interface (14) is configured to receive and process digital data transmitted by a remote control (60);
- the communications manager (16) is operatively connected to the first interface (12) and to the second interface (14) and is provided with a third interface (18) that is configured to:
- receive data from the first interface (12) and from the second interface (14), translate them into a format that is readable by the application controller (20), and transmit said translated data to said application controller (20),
- receive data from the application controller (20), encode said data in a format defined by the network protocol, and transmit said encoded data to the first interface (12).

2. The electromechanical device according to claim 1, wherein the communications manager (16) is configured to transmit the translated data to the application controller (20), queuing them up in sequence.

3. The electromechanical device according to any one of the preceding claims, wherein the first interface (12) comprises first hardware means, adapted to manage the modulation and demodulation of the wireless signal, and second hardware and software means adapted to process the received and sent digital data according to the network protocol.

4. The electromechanical device according to any one of the preceding claims, wherein the communication module (1) comprises one or more antennas (26, 27) operatively connected to the first and to the second interface (12, 14) to receive/transmit data.

5. A home automation network, comprising at least one electromechanical device (2) according to any one of the preceding claims, a gateway (70) adapted to receive and transmit data from and to the first wireless communication interface (12) by means of a wireless digital communication protocol, and a remote control (60) adapted to transmit digital data to the second wireless communication interface (14).

6. A method performed by a home automation network according to claim 5, comprising the steps of:
- providing an electromechanical device (2) according to any claim from 1 to 4;
- the remote control (60) activates the process of associating the application controller (20) with the home automation network;
- the application controller (20) sends a general association request to a multi-point digital communication network by means of the third communication interface (18) included in the communications manager (16) ;
- the communications manager (16) translates the general request into a specific request that complies with the communication protocol of the home automation network;
- a gateway (70) of the home automation network receives the specific request sent by the first communication interface (12) included in the communication module (1);
- the gateway (70) of the home automation network transmits to the first communication interface (12) a response that the association has been made;
- the communications manager (16) translates the response from the gateway (70) into a general confirmation message, which is readable by the application controller (20), and the communication manager (16) sends said general confirmation message to the application controller (20);
- the application controller (20) actuates the electromechanical actuator (22).

7. The method according to the preceding claim, wherein, at the end of the process of associating the electromechanical device (2) to the home automation network, the gateway (70) assigns a new address to the electromechanical device (2), updates the network map and sends a confirmation of association, and wherein the communications manager (16) receives said confirmation of association, translates it into a final message that the association has ended and was successful, and sends it to the application controller (20).

## Patentansprüche

1. Elektromechanische Vorrichtung (2) zum Steuern bzw. Regeln eines Rollladens oder einer Jalousie (52), umfassend:
i) zumindest einen elektromechanischen Aktor (22), wobei der elektromechanische Aktor (22) eine Getriebemotorengruppe ist, die geeignet ist, die Drehung eines Wickelrohrs (50) des Rolladens oder der Jalousie zu steuern bzw. zu regeln,
ii) einen Encoder (24), der operativ mit der Getriebemotorgruppe verbunden ist,
iii) einen Anwendungs-Controller (20), der konfiguriert ist, den elektromechanischen Aktor (22) zu steuern bzw. zu regeln, wobei der Anwendungs-Controller (20) konfiguriert ist, die Getriebemotorgruppe anzutreiben und Signale von dem Encoder (24) zu empfangen, und
iv) ein Kommunikationsmodul (1), das operativ mit dem Anwendungs-Controller verbunden ist, um den elektromechanischen Aktor über ein drahtloses Heimautomatisierungsnetzwerk zu steuern bzw. zu regeln,
wobei das Kommunikationsmodul (1) eine erste drahtlose Mehrpunkt-Kommunikationsschnittstelle (12), eine zweite drahtlose Punkt-zu-Punkt-Kommunikationsschnittstelle (14) und einen Kommunikationsmanager (16) umfasst, wobei:
- die erste Schnittstelle (12) konfiguriert ist, verschlüsselte digitale Daten von dem drahtlosen Netzwerk zu empfangen, sie an das drahtlose Netzwerk zu übertragen und sie gemäß einem Netzwerkprotokoll zu verarbeiten, das durch das drahtlose Netzwerk definiert ist;
- die zweite Schnittstelle (14) konfiguriert ist, digitale Daten zu empfangen und zu verarbeiten, die von einer Fernbedienung bzw. -steuerung (60) übertragen werden;
- der Kommunikationsmanager (16) operativ mit der ersten Schnittstelle (12) und der zweiten Schnittstelle (14) verbunden ist und mit einer dritten Schnittstelle (18) versehen ist, die konfiguriert ist zum:
- Empfangen von Daten von der ersten Schnittstelle (12) und von der zweiten Schnittstelle (14), Übersetzen derselben in ein Format, das durch den Anwendungs-Controller (20) lesbar ist, und Übertragen der übersetzten Daten an den Anwendungs-Controller (20),
- Empfangen von Daten von dem Anwendungs-Controller (20), Verschlüsseln der Daten in einem durch das Netzwerkprotokoll definierten Format und Übertragen der verschlüsselten Daten an die erste Schnittstelle (12).

2. Elektromechanische Vorrichtung nach Anspruch 1, wobei der Kommunikationsmanager (16) konfiguriert ist, die übersetzten Daten an den Anwendungs-Controller (20) zu übertragen, wobei sie der Reihe nach in die Warteschlange gestellt werden.

3. Elektromechanische Vorrichtung nach einem der vorhergehenden Ansprüche, wobei die erste Schnittstelle (12) erste Hardwaremittel, die angepasst sind, die Modulation und Demodulation des drahtlosen Signals zu verwalten, und zweite Hardware- und Softwaremittel umfasst, die angepasst sind, die empfangenen und gesendeten digitalen Daten gemäß dem Netzwerkprotokoll zu verarbeiten.

4. Elektromechanische Vorrichtung nach einem der vorhergehenden Ansprüche, wobei das Kommunikationsmodul (1) eine oder mehrere Antennen (26, 27) umfasst, die operativ mit der ersten bzw. der zweiten Schnittstelle (12, 14) verbunden sind, um Daten zu empfangen/übertragen.

5. Heimautomatisierungsnetzwerk, umfassend zumindest eine elektromechanische Vorrichtung (2) nach einem der vorhergehenden Ansprüche, ein Gateway (70), das angepasst ist, Daten von und zu der ersten drahtlosen Kommunikationsschnittstelle (12) mittels eines drahtlosen digitalen Kommunikationsprotokolls zu empfangen und zu übertragen, und eine Fernbedienung bzw. -steuerung (60), die angepasst ist, digitale Daten an die zweite drahtlose Kommunikationsschnittstelle (14) zu übertragen.

6. Verfahren, das von einem Heimautomatisierungsnetzwerk nach Anspruch 5 durchgeführt wird, umfassend die Schritte:
- Bereitstellen einer elektromechanischen Vorrichtung (2) nach einem der Ansprüche 1 bis 4;
- die Fernbedienung (60) aktiviert den Prozess der Verknüpfung bzw. des Zuordnens des Anwendungs-Controllers (20) mit dem Hausautomationsnetzwerk;
- der Anwendungscontroller (20) sendet eine allgemeine Verknüpfungs- bzw. Zuordnungssanfrage an ein digitales Mehrpunkt-Kommunikationsnetzwerk mittels der dritten Kommunikationsschnittstelle (18), die in dem Kommunikationsmanager (16) enthalten ist;
- der Kommunikationsmanager (16) übersetzt die allgemeine Anfrage in eine spezifische Anfrage, die das Kommunikationsprotokoll des Hausautomationsnetzwerks befolgt bzw. diesem entspricht;
- ein Gateway (70) des Hausautomationsnetzwerks empfängt die spezifische Anfrage, die von der ersten Kommunikationsschnittstelle (12) gesendet wird, die in dem Kommunikationsmodul (1) enthalten ist;
- das Gateway (70) des Hausautomationsnetzwerks überträgt eine Antwort, dass die Verknüpfung bzw. Zuordnung vorgenommen wurde, an die erste Kommunikationsschnittstelle (12);
- der Kommunikationsmanager (16) übersetzt die Antwort von dem Gateway (70) in eine allgemeine Bestätigungsnachricht, die durch den Anwendungs-Controller (20) lesbar ist, und der Kommunikationsmanager (16) sendet die allgemeine Bestätigungsnachricht an den Anwendungs-Controller (20);
- der Anwendungs-Controller (20) betätigt den elektromechanischen Aktor (22).

7. Verfahren nach dem vorhergehenden Anspruch, wobei am Ende des Prozesses des Verknüpfens der elektromechanischen Vorrichtung (2) mit dem Hausautomationsnetzwerk das Gateway (70) der elektromechanischen Vorrichtung (2) eine neue Adresse zuweist, die Netzwerkkarte aktualisiert und eine Bestätigung der Verknüpfung sendet, und wobei der Kommunikationsmanager (16) die Bestätigung der Verknüpfung empfängt, sie in eine endgültige Nachricht übersetzt, dass die Verknüpfung beendet wurde und erfolgreich war, und sie an den Anwendungs-Controller (20) sendet.

## Revendications

1. Dispositif électromécanique (2) pour commander un store ou volet roulant (52), comprenant :
i) au moins un actionneur électromécanique (22), dans lequel l'actionneur électromécanique (22) est un groupe moteur à engrenages adapté pour commander la rotation d'un tube d'enroulement (50) du store ou volet roulant,
ii) un codeur (24) connecté en fonctionnement au groupe moteur à engrenages,
iii) un dispositif de commande d'application (20) configuré pour commander ledit actionneur électromécanique (22), le dispositif de commande d'application (20) étant configuré pour piloter le groupe moteur à engrenages et pour recevoir des signaux à partir du codeur (24), et
iv) un module de communication (1) connecté en fonctionnement au dispositif de commande d'application pour commander l'actionneur électromécanique par le biais d'un réseau domotique sans fil,
dans lequel le module de communication (1) comprend une première interface de communication sans fil multipoints (12), une deuxième interface de communication sans fil point à point (14), et un gestionnaire de communications (16), dans lequel :
- la première interface (12) est configurée pour recevoir des données numériques codées à partir du réseau sans fil, les transmettre au réseau sans fil et les traiter conformément à un protocole de réseau défini par le réseau sans fil ;
- la deuxième interface (14) est configurée pour recevoir et traiter des données numériques transmises par une télécommande (60) ;
- le gestionnaire de communications (16) est connecté en fonctionnement à la première interface (12) et à la deuxième interface (14) et est doté d'une troisième interface (18) qui est configurée pour :
- recevoir des données à partir de la première interface (12) et de la deuxième interface (14), les traduit dans un format qui est lisible par le dispositif de commande d'application (20), et transmet lesdites données traduites audit dispositif de commande d'application (20),
- recevoir des données à partir du dispositif de commande d'application (20), coder lesdites données dans un format défini par le protocole de réseau et transmettre lesdites données codées à la première interface (12).

2. Dispositif électromécanique selon la revendication 1, dans lequel le gestionnaire de communications (16) est configuré pour transmettre les données traduites au dispositif de commande d'application (20), en les mettant en file d'attente en séquence.

3. Dispositif électromécanique selon l'une quelconque des revendications précédentes, dans lequel la première interface (12) comprend des premiers moyens matériels, adaptés pour gérer la modulation et la démodulation du signal sans fil, et des seconds moyens matériels et logiciels adaptés pour traiter les données numériques reçues et envoyées selon le protocole de réseau.

4. Dispositif électromécanique selon l'une quelconque des revendications précédentes, dans lequel le module de communication (1) comprend une ou plusieurs antennes (26, 27) connectées en fonctionnement à la première et à la deuxième interface (12, 14) pour recevoir/transmettre des données.

5. Réseau domotique comprenant au moins un dispositif électromécanique (2) selon l'une quelconque des revendications précédentes, une passerelle (70) adaptée pour recevoir et transmettre des données depuis et à la première interface de communication sans fil (12) au moyen d'un protocole de communication numérique sans fil, et une télécommande (60) adaptée pour transmettre des données numériques à la deuxième interface de communication sans fil (14).

6. Procédé réalisé par un réseau domotique selon la revendication 5, comprenant les étapes suivantes :
- la fourniture d'un dispositif électromécanique (2) selon l'une quelconque des revendications 1 à 4 ;
- la télécommande (60) active le processus d'association du dispositif de commande d'application (20) avec le réseau domotique ;
- le dispositif de commande d'application (20) envoie une demande d'association générale à un réseau de communication numérique multipoints au moyen de la troisième interface de communication (18) comprise dans le gestionnaire de communications (16) ;
- le gestionnaire de communications (16) traduit la demande générale en une demande spécifique qui se conforme au protocole de communication du réseau domotique ;
- une passerelle (70) du réseau domotique reçoit la demande spécifique envoyée par la première interface de communication (12) comprise dans le module de communication (1) ;
- la passerelle (70) du réseau domotique transmet à la première interface de communication (12) une réponse que l'association a été effectuée ;
- le gestionnaire de communications (16) traduit la réponse provenant de la passerelle (70) en un message de confirmation général, qui est lisible par le dispositif de commande d'application (20), et le gestionnaire de communications (16) envoie ledit message de confirmation général au dispositif de commande d'application (20) ;
- le dispositif de commande d'application (20) actionne l'actionneur électromécanique (22).

7. Procédé selon la revendication précédente, dans lequel, à la fin du processus d'association du dispositif électromécanique (2) au réseau domotique, la passerelle (70) attribue une nouvelle adresse au dispositif électromécanique (2), met à jour la carte de réseau et envoie une confirmation d'association, et dans lequel le gestionnaire de communications (16) reçoit ladite confirmation d'association, la traduit en un message final que l'association a été achevée et a réussi, et l'envoie au dispositif de commande d'application (20).
